# EUROPEAN PATENT APPLICATION

(11) **EP 2 466 092 A1**
(43) Date of publication of application: **20.06.2012**
(21) Application number: 10195718.1
(22) Date of filing: 17.12.2010
(51) Int. Cl.: F02B 37/013, F02B 37/22, F02B 37/02

(54) **Turbocharger System**

(71) Applicant: Perkins Engines Company Limited, Cambridgeshire PE1 5NA (GB)
(72) Inventor: Thorne, Christopher P., Bridgewater, Sommerset, TA7 0AH (GB); Oxborrow, James, Northhamptonshire, NN18 8FD (GB); Carlill, Thomas William, Peterborough, PE6 8SW (GB); Nicholson, Matthew Paul, Peterborough, PE7 8FR (GB)
(74) Representative: Bucks, Teresa Anne

(57) **Abstract**

This disclosure is directed to a turbocharger arrangement having a high pressure turbocharger and a low pressure turbocharger connected in series. The low pressure turbine has first and second volutes and the arrangement includes a control valve which controls the proportion of exhaust gas which is directed through the first and second passages to the first and second volutes.

## Description

### Background

This disclosure is directed to a turbocharger arrangement having a high pressure turbocharger and a low pressure turbocharger connected in series.

Turbocharged internal combustion engines are commonly used in on-highway and off-highway applications as they are able to develop significant torque and to provide sufficient power when driven at low speeds. This allows a relatively smaller engine to be operated economically during "normal" (on-highway) driving conditions whilst having the increased power characteristics of a larger engine when required. Such engines may include one or more turbochargers for compressing the air before it enters the combustion chamber. Turbochargers typically include a turbine, driven by exhaust gases of the engine, mounted on the same shaft as a compressor, which is thus driven by the turbine.

Turbochargers can be prone to overspeeding and generating very high pressures when the engine is operating at maximum speed and load. One way to reduce this problem is to bypass some of the exhaust gas around the turbine by means of a bypass valve or wastegate built into the turbocharger casing. The bypass valve or wastegate may consist of a spring loaded valve which acts in response to the inlet manifold pressure on a controlling diaphragm. When the wastegate is open only a proportion of the exhaust gases are directed to flow through the turbine and thereby used to generate power, whilst the remainder is redirected downstream of the turbine.

It is known to provide multiple turbochargers within a turbocharger system in an internal combustion engine, instead of a single larger conventional turbocharger. Two stage turbocharging provides one approach for providing high boost pressures and to obtain higher engine brake mean effective pressures, which is advantageous in off-highway applications. Multiple stages can be mounted in series or in parallel.

Where two turbochargers are mounted in series, generally one is a high pressure turbocharger and the other is a low pressure turbocharger, the combination of which enables the engine performance to be optimised. The high pressure stage is able to respond effectively to transient demands at lower engine speeds and provides the majority of the boost at those speeds. The low pressure stage provides the majority of the boost at the higher engine speeds and when the engine is operating under larger loads.

Such two-stage turbocharger arrangements may also use a by-pass valve or wastegate selectively to by-pass the high pressure turbine and redirect either all, or a proportion, of the exhaust gases directly to the low pressure turbine. Thus the system can operate as a single stage system using only the high pressure turbine or only the low pressure turbine or as a two stage system with both turbines operating in series to provide a higher level of boost.

The shaft coupling the turbine to the compressor is supported on bearings and located within the housing. A gallery may be defined in the portion of the housing surrounding the shaft and while the engine is running oil is pumped through the gallery to lubricate the shaft. While the engine is idling or running very slowly the pressure in the compressor housing and the turbine housing may be very low, and may even be negative in the compressor housing. The pressure differential between the compressor housing and the shaft housing can be substantial, which may lead to seal damage and consequently oil leaking into the inlet manifold.

Another problem with these turbocharger arrangements is that they can have a slow response time due to the transition between use of one or both stages. This is due to the time taken for the exhaust system driving the turbine to reach the required pressure and for the rotational inertia of the turbine to be overcome.

One solution is described in US-B-7426831 which describes a turbocharger arrangement having a high and a low pressure turbine, in which the low pressure turbine has first and second volutes which may have identical or dissimilar cross-sectional areas. The system uses a complex valve system comprising two valve members and a wastegate valve which are all selectively operable to direct the exhaust gas flow through one or both turbines and into either one or both volutes and/or to the wastegate, which provides a by-pass for the low pressure turbine.

### Summary

According to one aspect of the present disclosure there is provided a turbocharger arrangement for an internal combustion engine provided with an exhaust gas outlet, the turbocharger arrangement comprising:
first and second exhaust passages configured to be fluidly connected to the exhaust gas outlet;
a high pressure turbine disposed within the second passage;
a low pressure turbine assembly comprising:
   a first volute in fluid communication with the first passage; and
   a second volute in fluid communication with the second passage downstream of the high pressure turbine; and
control means configured to control the proportion of exhaust gas which is directed through the first and second passages.

The disclosure further provides a method of providing boost to an internal combustion engine with a serial high pressure and low pressure turbine arrangement, comprising:
controlling a control valve to direct exhaust gas in a first direction from the internal combustion engine to a first volute of the low pressure turbine and in a second direction to a second volute of the low pressure turbine via the high pressure turbine;
wherein the control valve controls the quantity of gas flowing in one or both directions.

By way of example only, one embodiment of a turbocharger arrangement for an internal combustion engine is now described with reference to, and as shown in, the accompanying drawings.

### Brief Description of Drawings

Figure 1 is a schematic representation of a turbocharger arrangement of the present disclosure;
Figure 2 is a schematic representation of the wastegate and servo used in the arrangement of Figure 1;
Figure 3 is a graph showing the relationship between engine speed and compressor air pressure ratio for different turbocharger arrangements; and
Figure 4 is a schematic representation of an alternative turbocharger arrangement to that shown in Figure 1.

### Detailed Description

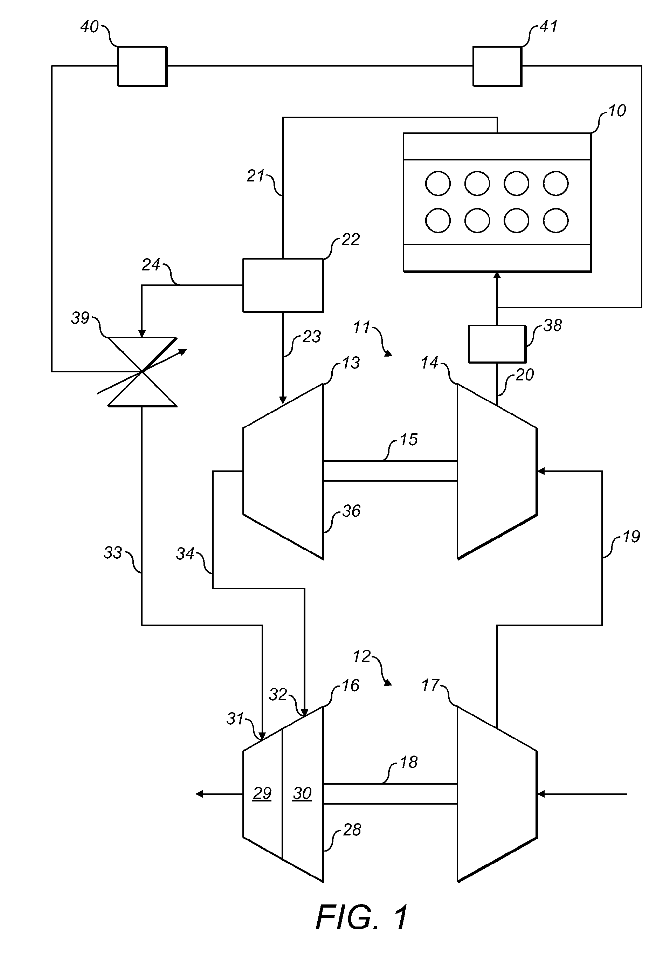

Figure 1 illustrates one embodiment of a twin turbocharger arrangement for an internal combustion engine 10, which may comprise an engine block defining a plurality of cylinders in which are disposed pistons. The turbocharger arrangement comprises a first turbocharger 11 and a second turbocharger 12 connected in series. The first turbocharger 11 provides a high pressure stage and comprises a high pressure turbine 13 and a high pressure compressor 14 mounted on a first rotatable shaft 15. The second turbocharger 12 provides a low pressure stage and comprises a low pressure turbine 16 and a low pressure compressor 17 mounted on a second rotatable shaft 18.

On the induction side of the internal combustion engine 10 the turbocharging fluid, typically air, may be first compressed by the low pressure compressor 17 before being fed via a connecting conduit 19 to the high pressure compressor 14 for further compression. The further compressed fluid may be typically cooled by means of an intake air cooler 38 and fed to the fresh air side of the engine 10 via conduit 20.

In this arrangement, on the exhaust side of the engine 10, the exhaust gas from the engine 10 is passed through the exhaust passage via conduit 21 to a first manifold 22 which is connected to two further conduits 23,24 which lead to, and are connected to, the inlet of the high pressure turbine 13 and to control means, such as a control valve 39 or another suitable means such as a wastegate or even a variable geometry turbine. The control means is configured to control the proportion of exhaust gas which is directed to the high and low pressure turbines 13,16 and through the first and second passages 33,34 to the volutes 29,30 of the low pressure turbine 16.

The low pressure turbine 16 may be an asymmetric turbine comprising a housing 28 having first and second volutes 29,30 which may have different cross-sectional diameters or flow areas. The housing 28 may further comprise a first inlet 31 to the first volute 29 and a second inlet 32 to the second volute 30. The control valve 39 may be an electronic control valve which is fluidly connected, by means of conduit 33, to the first inlet 31 of the first volute 29 and the high pressure turbine 13 is fluidly connected, by means of conduit 34, to the second inlet 32 of the second volute 30. The first volute 29 may therefore have a greater or smaller cross-sectional diameter or area than the second volute 29.

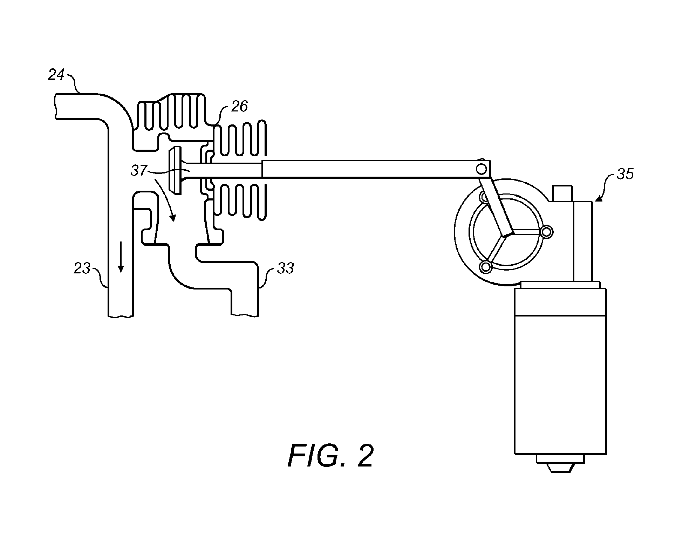

One example of a suitable electronic control valve 39 is shown in Figure 2. The valve 39 is preferably servo-controlled by means of an electric motor servo mechanism 35. For convenience both the control valve 39 and the servo mechanism 35 may be mounted on the housing 36 of the high pressure turbine 13. The servo mechanism 35 controls the position of a valve member 37 to vary the exhaust gas flow through the control valve 39 and the high pressure turbine 13. As the exhaust gas flow through the control valve 39 decreases, the exhaust gas flow through the high pressure turbine 13 increases and vice versa.

The control valve 39 may be controlled by a suitable feed forward control system. In one suitable arrangement a signal generator 41 may be provided to provide a signal according to the anticipated boost pressure according to the desired load/speed. The generated signal may be fed to the electronic control unit (ECU) 40 of a vehicle in which the internal combustion engine 10 is mounted, which in turn generates a signal which controls the degree to which the control valve 39 opens or closes.

Under steady state (load and speed) conditions the valve 39 is normally closed, or nearly closed, such that the majority of the exhaust flow passes into the high pressure turbine 13, which is providing most of the work, into the second volute 30 of the low pressure turbine 16 which keeps it turning over. Under transient increased speed and load conditions the valve 39 is opened to provide exhaust gas flow directly to the first volute 29. This enables the low pressure turbine 16 to speed up more quickly than if the exhaust gas was directed to a non-asymmetric turbine.

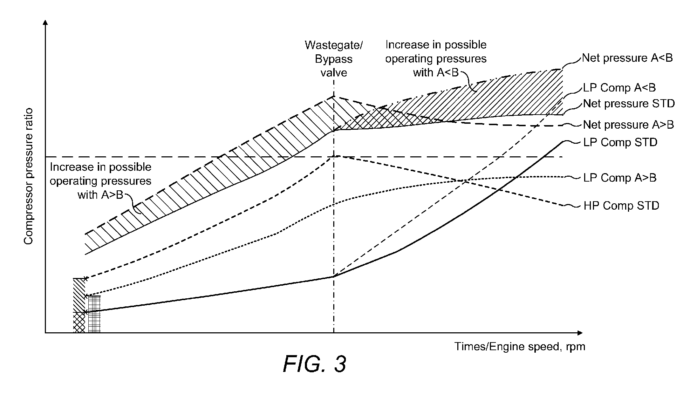

The relative size of the volutes 29 (A),30 (B) has a direct effect on the compressor pressure ratio at different engine speeds. This is shown in the graphs of Figure 3 which provide examples of the compressor pressure ratios achieved for the arrangement of Figure 1 when volute 29(A) is smaller than volute 30(B) and also when volute 29(A) is larger than volute 30(B). In addition, Figure 3 shows an example of the compressor pressure ratios for the turbocharger arrangement when the asymmetric low pressure turbine 16 is replaced with a standard low pressure turbine, hereinafter referred to as "the standard turbocharger". The vertical line indicates the engine speed at which the wastegate opens, which was determined having due regard to the maximum pressure across the high pressure turbine.

### Example 1 - Volute 29(A) < volute 30(B)

In this example, the turbocharger arrangement corresponds to that shown in Figure 1 and comprises a small high pressure turbine 13 driving the high pressure compressor 14. Furthermore, the asymmetric low pressure turbine 16 has a small first volute 29(A) and a large second volute 30(B) for driving low pressure compressor 17.

The HP COMP line describes the air pressure ratio of the high pressure compressor 14 for all examples since they all include the same small high pressure turbine 13. Specifically, the small high pressure turbine 13 speeds up quickly as the engine speed increases, so the air pressure ratio at the high pressure compressor 14 rises quickly as the engine 10 speeds up. The control valve 39 opens when the small high pressure turbine 13 approaches its maximum speed so as to cause some exhaust gases to bypass the small high pressure turbine 13. This causes the air pressure ratio at the high pressure compressor 14 to fall as the engine speed continues to increase.

The LP COMP A<B line describes the change in air pressure ratio for the low pressure compressor 17. In this example, the large second volute 30(B) is much like the low pressure turbine 16 of the standard turbocharger. As such, prior to the opening of the control valve 39, the LP COMP **A<B** line corresponds to the standard **LP COMP STD** line. Once the control valve 39 opens less exhaust gas passes through the small high pressure turbine 13 and large volute 30(B), so that the large volute 30 receives less energy. However, the exhaust gas which passes via the control valve 39 is directed to the small volute 29(A), which speeds up very quickly. The energy transferred to both volutes 29(A),30(B) causes the low pressure compressor 17 to speed up and thus the air pressure ratio at that compressor 17 increases rapidly with engine speed.

The **NET PRESSURE A<B** line on the graph shows the operating pressure at different engine speeds based on lines **HP COMP** and **LP COMP A<B.** Notably, once the control valve 39 opens, the net pressure of this configuration is greater than the net pressure generated by the standard turbocharger and also the turbocharger of the second example.

### Example 2 - Volute 29(A) > volute 30(B)

In this example, the turbocharger arrangement corresponds to that shown in Figure 1 and comprises a small high pressure turbine 13 driving the high pressure compressor 14 and an asymmetric low pressure turbine 16 having two volutes. In this example the second volute 30(B) is smaller than the first volute 29(A). Exhaust gases pass through the small high pressure turbine 13 and then through the small second volute 30.

As noted above, the **HP COMP line** describes the air pressure ratio of the high pressure compressor 14 for all examples since they all include the same small high pressure turbine 13.

The LP COMP A>B line describes the change in pressure ratio for the low pressure compressor 17 when the first volute 29(A) is larger than the second volute 30(B). The size of the second volute enables it to speed up quickly (much like the high pressure turbine 13, but to a lesser extent given that the exhaust gases passing through the second volute have less energy). This causes the air pressure ratio at the low pressure compressor 17 to rise quickly as the engine 10 speeds up, but again to a lesser extent than the air pressure at the high pressure compressor 14. Once the control valve 39 is opened a proportion of the exhaust gas bypasses the small high pressure turbine 13 and is instead directed through the large first volute 29(B), which is slow to speed up due to its size. Thus, once the control valve 39 is opened the air pressure ratio at the low pressure compressor 17 continues to rise with engine speed, but at a slower rate.

The operating pressure of this turbocharger arrangement is shown by the NET PRESSURE A>B line, which is based on the lines HP COMP and LP COMP A>B. Notably, prior to the opening of the control valve 39 (and shortly thereafter) the net pressure of this configuration is greater than the net pressure of the standard turbocharger (illustrated by the NET PRESSURE line) and also turbocharger configuration of Example 1. Furthermore, because of the elevated pressure ratio in the low pressure compressor at low engine speeds, this arrangement serves to reduce the likelihood of oil leaks.

Therefore, the volute characteristics can be selected according to the boost required at different engine speeds. At high speed ranges the configuration of the first example may be advantageous and at low speed ranges the configuration of the second example may be advantageous.

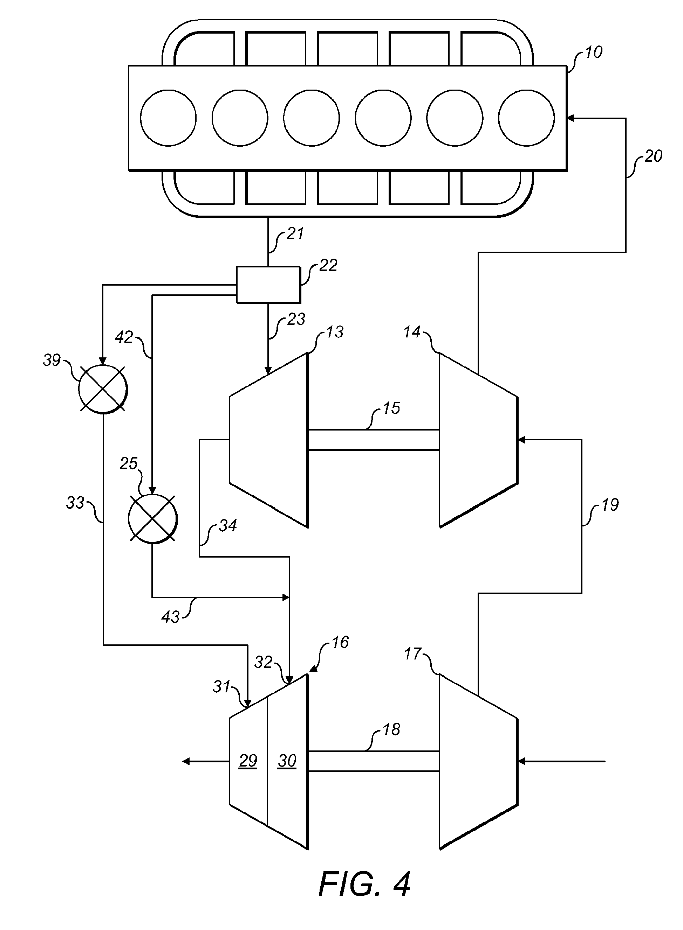

Figure 4 shows another turbocharger arrangement for an internal combustion engine 10. This arrangement is similar to that of Figure 1, except the exhaust flow from the engine is divided at manifold 22 between the conduit 24, which is connected to the inlet of the wastegate 39, the conduit 23, which is connected to the inlet of the high pressure turbine 13, and also a conduit 42, which is connected to the inlet of a wastegate 25. As with the arrangement of Figure 1, the conduit 34 is connected directly to the second inlet 32 of the second volute 30 of the low pressure turbine 16. The outlet of the wastegate 25 is connected to conduit 43 which is fluidly connected to the conduit 34. The addition of the second wastegate 25 provides enhanced control of the exhaust flow through the high pressure turbine 13 and thus the energy transferred to the low pressure volute 30, which may facilitate further control of the net operating pressure of the compressors.

The turbocharger arrangement may have a low pressure turbine assembly comprising first and second turbines drivingly coupled to a single shaft. The first turbine is fluidly connected to the first volute (29) and the second turbine is fluidly connected to the second volute (30). One of the first and second turbines is a high pressure turbine and the other of the first and second turbines is a low pressure turbine and this arrangement provides the ability to accommodate different exhaust mass flow rates. Unlike the other illustrated embodiments, in this arrangement the volutes (29, 30) may be of the same size, but the turbines may have different geometries for harnessing different amounts of energy from the exhaust gases.

In all the aforementioned embodiments the first and second volutes 29, 30 may have the same or differing cross sectional diameters. In the illustrated embodiments, in which there is only a single low pressure turbine (16) with two volutes feeding exhaust gas thereto, the provision of one volute which has a smaller cross sectional diameter than the other provides a restriction, which increases the flow rate of the gas passing therethrough which has the effect described above. Thus during a sudden transient this arrangement enables the larger low pressure turbocharger to spool up more quickly.

The high pressure turbine 13 may be a fixed or variable geometry turbine. The control valve 39 may be an internal or an external (i.e. to the high pressure turbine 13) valve or wastegate and the wastegate 25 may be internal or external.

### Industrial Applicability

The disclosed turbocharger arrangement may be applicable to a range of internal combustion engines.

In operation the air flows into the low pressure compressor 17 and compressed air flows from the output of the low pressure compressor 17 to the input of the high pressure compressor 14. The further compressed air flows from the output of the high pressure compressor 14 to the engine 10. Operation of the control valve 39 controls the proportion of the exhaust gas from the engine 10 which is directed to the high pressure turbine 13 and that which passes through the control valve 39 before being directed to the first inlet 31 of the first volute 29 of the low pressure turbine 16.

All of the exhaust flow from the high pressure turbine 13 may be directed to the second inlet 32 of the second volute 30 of the low pressure turbine 16.

Where the turbocharger arrangement includes a second control valve 25, this is operable to control the proportion of gas passing through the high pressure turbine 13. This therefore allows a quantity of gas to by pass the high pressure turbine 13 before being recombined with the gas which has passed through the high pressure turbine 13, before being directed to the second volute 30.

The exhaust flow from the low pressure turbine 16 is exhausted to atmosphere.

## Claims

1. A turbocharger arrangement for an internal combustion engine (10) provided with an exhaust gas outlet, the turbocharger arrangement comprising:
first and second exhaust passages (33,34) configured to be fluidly connected to the exhaust gas outlet;
a high pressure turbine (13)disposed within the second passage (34);
a low pressure turbine assembly (16) comprising:
a first volute (29) in fluid communication with the first passage (33); and
a second volute (30) in fluid communication with the second passage (34) downstream of the high pressure turbine (13); and
control means (39) configured to control the proportion of exhaust gas which is directed through the first and second passages (33,34).

2. The turbocharger arrangement as claimed in claim 1, wherein the low pressure turbine assembly (16) further includes first and second turbines drivingly coupled to a single shaft, the first turbine being in fluid communication with the first volute (29) and the second turbine being in fluid communication with the second volute (30).

3. The turbocharger arrangement as claimed in claim 2, wherein one of the first and second turbines is a high pressure turbine and the other of the first and second turbines is a low pressure turbine so as to accommodate different exhaust mass flow rates.

4. The turbocharger arrangement as claimed in any one of the preceding claims in which the first and second volutes (29,30)of the low pressure turbine (16) have different cross-sectional areas.

5. The turbocharger arrangement as claimed in any one of the preceding claims in which the relative size of the volutes (29,30) is selected to achieve greater air pressure prior to opening of the control valve (39).

6. The turbocharger arrangement as claimed in any one of the preceding claims in which the relative size of the volutes (29,30) is selected to achieve greater air pressure substantially after the opening of the control valve (39).

7. The turbocharger arrangement as claimed in any one of the preceding claims in which the control means (39) is a valve, wastegate or variable geometry turbocharger.

8. The turbocharger arrangement as claimed in any one of the preceding claims in which the control means (39) is servo-controlled.

9. The turbocharger arrangement as claimed in any one of the preceding claims comprising a control system (40,41) adapted to control the control means (39) in response to engine speed/load requirements.

10. The turbocharger arrangement as claimed in claim 9 in which the control system (40,41) is a feed forward control system.

11. The turbocharger arrangement as claimed in any one of the preceding claims further comprising a second control means (25) configured to assist in controlling the proportion of exhaust gas directed through the first and second passages (33,34).

12. The turbocharger arrangement as claimed in any one of the preceding claims further comprising a third passage (42) in fluid communication with the second passage (34) at a location downstream of the high pressure turbine (13) and upstream of the second volute (30), the said third passage (42) being connectable to the exhaust gas outlet.

13. The turbocharger arrangement as claimed in claim 12 as dependent on claim 11 in which the second control means (25) is configured to control the proportion of exhaust gas directed to the second volute (30) via the third passage (42) .

14. A method of providing boost to an internal combustion engine (10) with a serial high pressure and low pressure turbine arrangement (13,16), comprising:
controlling a control valve (39) to direct exhaust gas in a first direction from the internal combustion engine (10) to a first volute (29) of the low pressure turbine (16) via the high pressure turbine (13) and in a second direction to a second volute (30) of the low pressure turbine (13);
wherein the control valve (39) controls the proportion of gas flowing in one or both directions.

15. The method of claim 14 further comprising controlling a second control valve (25) to assist in controlling the proportion of gas flowing in one or both directions.
